# EUROPEAN PATENT APPLICATION

(11) **EP 4 464 210 A1**
(43) Date of publication of application: **20.11.2024**
(21) Application number: 23174175.2
(22) Date of filing: 18.05.2023
(51) Int. Cl.: A47J 43/07, A47J 44/00

(54) **KITCHEN APPLIANCE COMPRISING A WEIGHING SENSOR ASSEMBLY**

(71) Applicant: Versuni Holding B.V., 5656 AE Eindhoven (NL)
(72) Inventor: FLOESSHOLZER, Hannes Uwe, 5656 AE Eindhoven (NL)
(74) Representative: Vollering, Stefanus Franciscus Maria

(57) **Abstract**

Provided is a kitchen appliance (100) comprising a food preparation chamber (102), and a storage container (104) in which contents (106) are storable prior to delivery to the food preparation chamber. The food preparation chamber and the storage container are integrated in a main assembly (108) of the kitchen appliance. A support member (110), e.g. a support foot, supports thereon at least part of the storage container. A weighing sensor assembly (112) supports, and is thus able to weigh, the main assembly other than the at least part of the storage container that is supported on the support member.

## Description

### FIELD OF THE INVENTION

The invention relates to a kitchen appliance comprising a weighing sensor assembly.

### BACKGROUND OF THE INVENTION

There are currently many kitchen appliances with an integrated weighing system on the market. The integrated weighing system facilitates determination of how much ingredients are being added when following a recipe, and/or can assist with following a food preparation, e.g. cooking, process. To this end, the whole kitchen appliance may, for example, stand on three or four weighing sensors.

Certain kitchen appliances include an integrated storage container whose contents, e.g. ingredients, are deliverable into a food preparation chamber. Food may be cooked, mixed, blended, chopped, etc. in such a food preparation chamber depending on the type of kitchen appliance.

Standing the whole kitchen appliance on weighing sensors can pose certain challenges, particularly should the kitchen appliance include such an integrated storage container. For kitchen appliances of this type, the weight of the whole kitchen appliance may remain unchanged by delivery of the contents of the storage container to the food preparation chamber. This can present difficulty in terms of tracking the weight of the contents received specifically in the food preparation chamber.

This tracking may be key to ensuring that the desired amount of contents of the storage container is delivered into the food preparation chamber, but may also be important for following and/or controlling any changes to the weight of ingredients received in the food preparation chamber during food preparation, e.g. cooking.

It may therefore be desirable to arrange weighing sensors inside the kitchen appliance so that only the food preparation chamber is weighed. However, arranging weighing sensors in this way can be problematic. The food preparation functionality of the kitchen appliance can make it difficult to install weighing sensors for weighing only the food preparation chamber in a way that appropriately accounts/corrects for influences, e.g. mechanical forces, heat, etc., associated with the food preparation functionality.

### SUMMARY OF THE INVENTION

The invention is defined by the claims.

According to examples in accordance with an aspect of the invention, there is provided a kitchen appliance comprising: a food preparation chamber; a storage container in which contents are storable prior to delivery to the food preparation chamber, the food preparation chamber and the storage container being integrated in a main assembly of the kitchen appliance; a support member on which at least part of the storage container is supportable; and a weighing sensor assembly on which the main assembly, other than said at least part of the storage container, is supportable so as to be weighed by the weighing sensor assembly.

By the support member supporting at least part of the storage container, and the weighing sensor assembly weighing the main assembly other than the at least part of the storage container supported on the support member, specific weighing of the food preparation chamber may be facilitated, in spite of the storage container being integrated, in other words provided together, with the food preparation chamber in the kitchen appliance's main assembly.

This is because the support member may assist to exclude the weight of the storage container from the weight of the main assembly, in which the food preparation chamber is included, sensed by the weighing sensor assembly.

Thus, the weighing sensor assembly can be arranged to support the kitchen appliance's main assembly, rather than being arranged, for instance, inside the main assembly in order to weigh the food preparation chamber. This may assist to alleviate the risk of the weighing sensor assembly and food preparation functionality provided inside the main assembly from interfering with each other. The weighing sensor assembly may nonetheless enable tracking of the weight of contents of specifically the food preparation chamber due to inclusion of the support member.

In some embodiments, the support member and the weighing sensor assembly protrude from a table-top facing side of the main assembly, with the support member being arranged beneath the storage container. Such protrusion of the weighing sensor assembly from the table-top facing side of the main assembly may, for example, assist positioning of the weighing sensor assembly away from food preparation functionality of the kitchen appliance included in the main assembly.

In some embodiments, the main assembly comprises a structure for retaining the food preparation chamber and the storage container, with the structure, other than the at least part of the storage container supported on the support member, being supported on the weighing sensor assembly.

The structure's retention of the food preparation chamber and the storage container may assist with, or may define, the integration of the food preparation chamber and the storage container in the main assembly.

The food preparation chamber may be supported by the structure, with the structure, other than the at least part of the storage container, being supported on the weighing sensor assembly.

The structure of the main assembly can take any suitable form. In some embodiments, the structure comprises, e.g. is defined by, a chassis and/or a housing of the main assembly.

In some embodiments, the storage container is arranged above the support member, with the support member comprising a support limb portion that upstands to the storage container. The support limb portion may enable the storage container to be supported above the table-top facing side of the main assembly.

In such embodiments, an aperture may be defined in the structure of the main assembly, through which aperture the support limb portion upstands towards the storage container.

The aperture may assist with excluding the weight of the storage container from the weight of the main assembly sensed by the weighing sensor assembly, since the support member, including the support limb portion extending through the aperture, can support the storage container independently of the structure.

In such embodiments, the aperture may be wider than a width of the support limb portion where the support limb portion extends through the aperture, such that a gap is defined between the support limb portion and a portion of the structure delimiting the aperture. This gap may assist the support member, including the support limb portion, to support the storage container independently of the structure, e.g. chassis and/or housing, of the main assembly.

In some embodiments, the kitchen appliance comprises a flexible conduit through which the contents of the storage container are deliverable to the food preparation chamber. The flexibility of the conduit may assist with decoupling the storage container's weight from the weight of the remainder of the main assembly.

The conduit may comprise, e.g. be in the form of, a flexible hose.

In at least some embodiments, the weighing sensor assembly comprises one or more load cells. Such load cell(s) may rest on a table-top, and support the main assembly, other than the at least part of the storage container supported on the support member, arranged on top of the load cell(s). For example, three or four load cells may be arranged, spaced apart from each other, on the table-top facing side of the main assembly.

In at least some embodiments, an underside of the weighing sensor assembly is arranged to contact a table-top on which the kitchen appliance is disposed. Alternatively or additionally, an underside of the support member may be arranged to contact the table-top.

In some embodiments, the storage container is suitable for storing liquid. Such a liquid can, for example, comprise, e.g. be, water. Delivery of liquid into the food preparation chamber can assist with cooking, mixing, blending, chopping, juicing, etc. of food ingredients in the food preparation chamber.

In some embodiments, the kitchen appliance comprises a dosing arrangement for controlling delivery of the contents of the storage container to the food preparation chamber.

The dosing arrangement may, for example, be configured to control delivery of the contents of the storage container to the food preparation chamber based on the weight of the main assembly, other than the at least part of the storage container that is supported on the support member.

Alternatively or additionally, a food preparation procedure, e.g. a cooking process, taking place in the food preparation chamber may be controlled based on the weight of the main assembly, other than the at least part of the storage container that is supported on the support member.

For example, a control signal denoting completion of a food preparation procedure, e.g. a cooking process, taking place in the food preparation chamber may be generated by a controller included in the kitchen appliance. Generation of the control signal may be based on the weight of the main assembly, other than the at least part of the storage container that is supported on the support member.

Such a control signal may cause a change to, e.g. cessation of, operation of the food preparation functionality, e.g. heating system and/or motorized drive system, and/or may cause a user interface to alert a user of the kitchen appliance to the food preparation procedure being complete.

More generally, the kitchen appliance may comprise a heating system for heating the food preparation chamber. Alternatively or additionally, the kitchen appliance may comprise a motorized drive system for driving movement of a utensil arranged in the food preparation chamber.

The kitchen appliance can be of any type. In some embodiments, the kitchen appliance is a cooking appliance, such as an air fryer, an air cooker, a food steamer, a bread maker or a rice cooker. Alternatively, the kitchen appliance may be a pasta maker, a coffee maker, a food processor, a juicer, or a blender.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
FIG. 1 schematically depicts a kitchen appliance according to a first example;
FIG. 2 schematically depicts a kitchen appliance according to a second example;
FIG. 3 schematically depicts a kitchen appliance according to a third example; and
FIG. 4 schematically depicts a kitchen appliance according to a fourth example.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Provided is a kitchen appliance comprising a food preparation chamber, and a storage container in which contents are storable prior to delivery to the food preparation chamber. The food preparation chamber and the storage container are integrated in a main assembly of the kitchen appliance. A support member, e.g. a support foot, supports thereon at least part of the storage container. A weighing sensor assembly supports, and is thus able to weigh, the main assembly other than the at least part of the storage container that is supported on the support member.

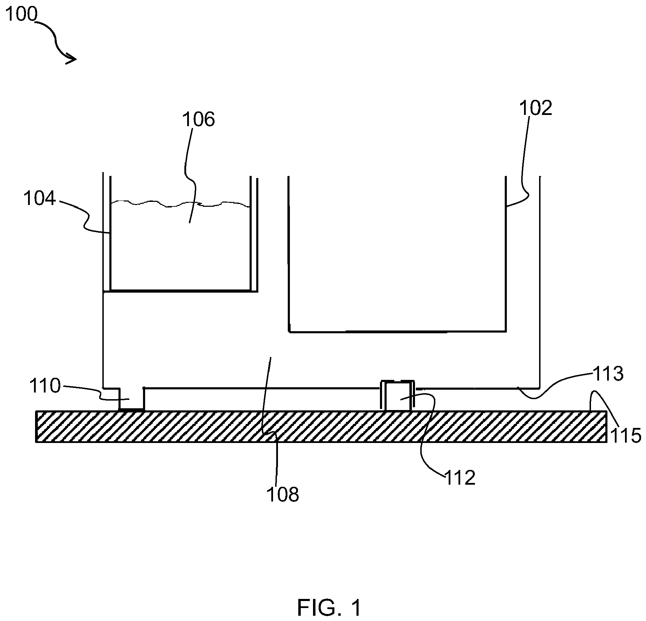

FIG. 1 schematically depicts a kitchen appliance 100 according to an example. The kitchen appliance 100 comprises a food preparation chamber 102 in which food ingredients are receivable. The kitchen appliance 100 also includes a storage container 104 in which contents 106, e.g. food ingredients, are storable prior to delivery to the food preparation chamber 102.

Various food preparation processes can be implemented in the food preparation chamber 102, for example cooking, mixing and/or cutting of food ingredients.

In some embodiments, the kitchen appliance 100 comprises a cooking appliance that includes a heating system for heating the food preparation chamber 102.

In such embodiments, the cooking appliance may include a circulation system for circulating air heated by the heating system in the food preparation chamber 102.

Alternatively or additionally, the kitchen appliance 100 may comprise a motorized drive system for driving movement of a utensil arranged in the food preparation chamber 102.

Such a utensil can be of any type. In some embodiments, the utensil comprises one or more of a cutter, a mixer, a whisk, a rotatable filter, and a dough hook.

The kitchen appliance 100 can be any type of kitchen appliance 100 used for food preparation. Particular mention is made of the kitchen appliance being an air fryer, an air cooker, a food steamer, a rice cooker, a pasta maker, a bread maker, a coffee maker, a food processor, a juicer, or a blender.

In some embodiments, the storage container 104 is suitable for storing liquid. Such a liquid can, for example, comprise, e.g. be, water. Delivery of liquid into the food preparation chamber 102 can assist with cooking, mixing, blending, chopping, juicing, etc. of food ingredients in the food preparation chamber 102.

In embodiments in which the kitchen appliance 100 is a rice cooker, the storage container 104 may store water for delivering into the food preparation chamber 102. In such embodiments, the food preparation chamber 102 may be heated by the heating system in order to cook rice in the water delivered to the food preparation chamber 102 from the storage container 104.

In embodiments in which the kitchen appliance 100 is an air fryer, an air cooker or a food steamer, the storage container 104 may store water for delivering into the food preparation chamber 102 in order to provide steam cooking conditions in the food preparation chamber 102.

It is noted that when the kitchen appliance 100 is an air fryer, the above-mentioned circulation system may be arranged to circulate air upwardly through food received in the food preparation chamber 102 in the direction of the top of the food preparation chamber 102 and/or downwardly through food received in the food preparation chamber 102 in the direction of a bottom of the food preparation chamber 102.

On the other hand, when the kitchen appliance 100 is an air cooker, the circulation system may be arranged to circulate air laterally across and through food received in the food preparation chamber 102, with the air being laterally directed towards a side portion of the food preparation chamber 102 that extends between the top and bottom of the food preparation chamber 102.

In embodiments in which the kitchen appliance 100 is a coffee maker, the storage container 104 may store water for delivering into the food preparation chamber 102 in order to enable coffee to be brewed in the food preparation chamber 102. In such embodiments, the food preparation chamber 102 may be regarded as a coffee brewing chamber.

In embodiments in which the kitchen appliance 100 is a pasta maker or a bread maker, the storage container 104 may store water and/or flour.

In embodiments in which the storage container 104 stores more than one type of ingredient, such as water and flour, the storage container 104 may be divided into storage portions in which each type of ingredient is storable separately from the other type(s) of ingredient.

Such storage portions may, for example, be arranged in a row.

It is noted that such a row may extend into the plane of a view of the type provided in FIG. 1, so that only one of such a plurality of storage portions would be visible.

Referring again to FIG. 1, the food preparation chamber 102 and the storage container 104 are integrated, in other words provided together, in a main assembly 108 of the kitchen appliance 100. Food preparation functionality, e.g. the heating system and/or the motorized drive system, may also be included in the main assembly 108.

In some embodiments, the main assembly 108 comprises a structure for retaining the food preparation chamber 102 and the storage container 104. The structure's retention of the food preparation chamber 102 and the storage container 104 may assist with, or may define, the integration of the food preparation chamber 102 and the storage container 104 in the main assembly.

The structure of the main assembly 108 can take any suitable form. In some embodiments, the structure comprises, e.g. is defined by, a chassis and/or a housing of the main assembly 108.

The structure, e.g. chassis and/or housing, may be formed from any suitable material, such as a plastic and/or a metallic material.

In some embodiments, the food preparation chamber 102 and/or the storage container 104 may be detachable from the structure of the main assembly 108.

This may assist with cleaning and/or maintenance of the kitchen appliance 100. Detachment of the food preparation chamber 102 and/or the storage container 104 may also facilitate loading of food ingredients into and unloading of food ingredients from the respective vessel.

It is noted that the food preparation chamber 102 and the storage container 104 may be retained by the structure of the main assembly 108 due to being mounted or mountable in the structure, in spite of one or both of the food preparation chamber 102 and the storage container 104 being, in some embodiments, detachable from the structure.

The kitchen appliance's 100 food preparation functionality, e.g. the heating system and/or the motorized drive system, may be retained, together with the food preparation chamber 102 and the storage container 104, by the structure of the main assembly 108.

The kitchen appliance 100 includes a support member 110 on which at least part of the storage container 104 is supportable, and a weighing sensor assembly 112 on which the main assembly 108, other than the at least part of the storage container 104, is supportable so as to be weighed by the weighing sensor assembly 112. For example, the structure, e.g. chassis and/or housing, for retaining the food preparation chamber 102 and the storage container 104 is supported on the weighing sensor assembly 112 but without the weighing sensor assembly 112 supporting the at least part of the storage container 104 that is supported on the support member 110.

The remainder of the main assembly 108 that is supported on the weighing sensor assembly 112 rather than on the support member 110 may thus comprise the food preparation chamber 102.

Implicit in the at least part of the storage container 104 being supported on the support member 110 is that the support member 110 is arranged beneath the at least part of the storage container 104.

In at least some embodiments, such as shown in FIG. 1, the food preparation chamber 102 and the storage container 104 are arranged in the main assembly 108 at different lateral positions relative to each other, with the support member 110 being beneath the at least part of the storage container 104 but laterally spaced apart from, in other words not beneath, the bottom of the food preparation chamber 102.

Alternatively or additionally, the support member 110 and the weighing sensor assembly 112 may protrude from a table-top facing side 113 of the main assembly 108, with the support member 110 being arranged beneath the storage container 104. The table-top facing side 113 of the main assembly 108 may, for example, be a table-top facing side 113 of the structure, e.g. chassis and/or housing, of the main assembly 108.

Such protrusion of the weighing sensor assembly 112 from the table-top facing side 113 of the main assembly 108 may, for example, assist positioning of the weighing sensor assembly 112 away from food preparation functionality, such as the heating system and/or the motorized drive system, included in the main assembly 108.

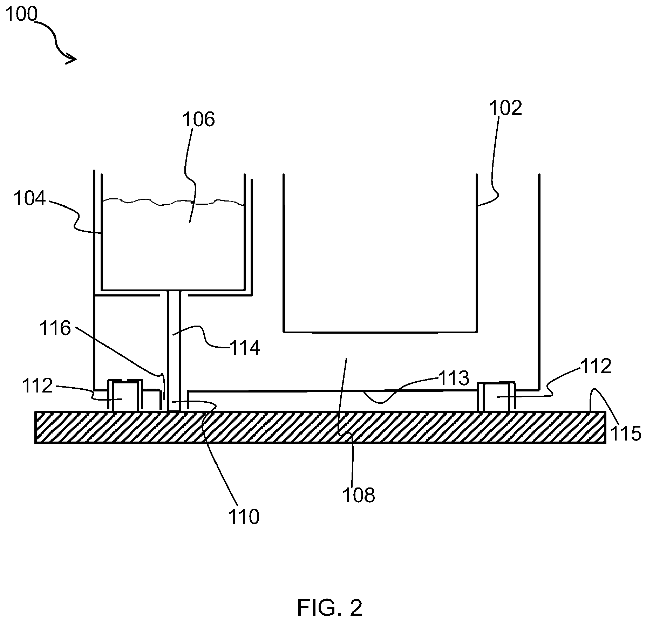

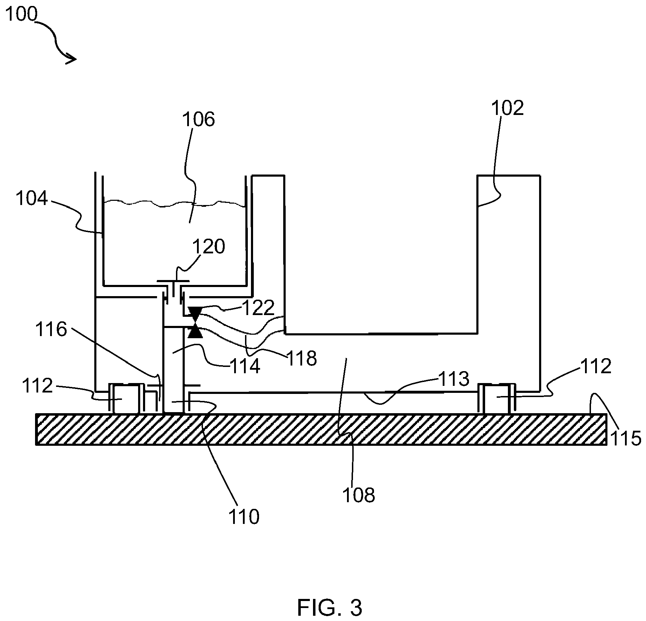

In some embodiments, such as shown in FIGs. 2 and 3, the storage container 104 is arranged above the support member 110, with the support member 110 including a support limb portion 114 that upstands to the storage container 104. The support limb portion 114 may enable the storage container 104 to be supported above the table-top facing side 113 of the main assembly 108.

The support member 110 may include, e.g. may be in the form of, a support foot.

In embodiments in which the support limb portion 114 is included in the support member 110, the support limb portion 114 may, for example, be regarded as being included in such a support foot.

More generally, by the support member 110 supporting at least part of the storage container 104, and the weighing sensor assembly 112 weighing the main assembly 108 other than the at least part of the storage container 104 supported on the support member 110, specific weighing of the food preparation chamber 102 may be facilitated, in spite of the storage container 104 being integrated, in other words provided together, with the food preparation chamber 102 in the kitchen appliance's 100 main assembly 108.

This is because the support member 110 may assist to exclude the weight of the storage container 104 from the weight of the main assembly 108, in which the food preparation chamber 102 is included, sensed by the weighing sensor assembly 112.

Thus, the weighing sensor assembly 112 can be arranged to support the kitchen appliance's 100 main assembly 108, rather than being arranged, for instance, inside the main assembly 108, e.g. inside the structure of the main assembly 108, in order to weigh the food preparation chamber 102. This may assist to alleviate the risk of the weighing sensor assembly 112 and the food preparation functionality, such as the heating system and/or the motorized drive system, provided inside the main assembly 108 from interfering with each other. The weighing sensor assembly 112 may nonetheless enable tracking of the weight of contents of specifically the food preparation chamber 102 due to inclusion of the support member 110.

In at least some embodiments, the weighing sensor assembly 112 comprises one or more load cells. Such load cell(s) may rest on a table-top 115 on which the kitchen appliance 100 is disposed, and support the main assembly 108, other than the at least part of the storage container 104 supported on the support member 110, arranged on top of the load cell(s). For example, three or four load cells may be arranged, spaced apart from each other, on the table-top facing side 113 of the main assembly 108.

An underside of the weighing sensor assembly 112, e.g. underside(s) of the load cell(s) included in the weighing sensor assembly 112, may be arranged to contact the table-top 115 on which the kitchen appliance 100 is disposed. Alternatively or additionally, an underside of the support member 110 may be arranged to contact the table-top 115.

In some embodiments, such as shown in FIGs. 2 and 3, an aperture 116 is defined in the structure of the main assembly 108, through which aperture 116 the support limb portion 114 upstands towards the storage container 104.

The aperture 116 may assist with excluding the weight of the storage container 104 from the weight of the main assembly 108 sensed by the weighing sensor assembly 112, since the support member 110, including the support limb portion 114 extending through the aperture 116, can support the storage container 104 independently of the structure, e.g. chassis and/or housing, of the main assembly 108. The precision with which the food preparation chamber 102 can be weighed may therefore be enhanced relative to embodiments, such as that shown in FIG. 1, in which no such support limp-aperture arrangement 114, 116 is included in the kitchen appliance 100. It is nonetheless noted that the latter may benefit from fewer load cells being required for the weighing sensor assembly 112.

In some embodiments, the aperture 116 is wider than a width of the support limb portion 114 where the support limb portion 114 extends through the aperture 116, such that a gap is defined between the support limb portion 114 and a portion of the structure delimiting the aperture 116. This gap may assist the support member 110 and the support limb portion 114 to support the storage container 104 independently of the structure, e.g. chassis and/or housing, of the main assembly 108.

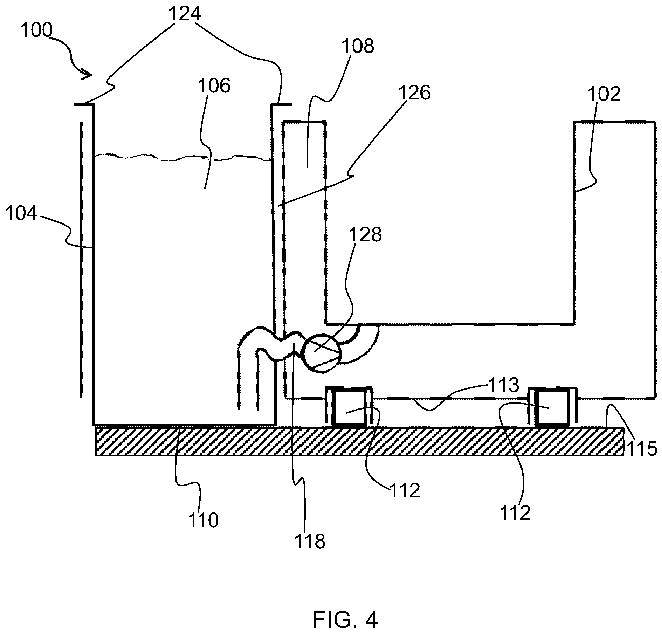

In some embodiments, such as shown in FIG. 4, the support member 110 is defined, at least partly, e.g. entirely, by a bottom of the storage container 104.

In such embodiments, the bottom of the storage container 104 may rest on the table-top 115 on which the kitchen appliance 100 is disposed.

It is noted that the storage container 104 is still integrated, together with the food preparation chamber 102, in the main assembly 108 of the kitchen appliance 100, in spite of the bottom of the storage container 104 at least partly defining the support member 110.

In this respect, the storage container 104 may be lifted from the table-top 115, together with the rest of the main assembly 108, including the food preparation chamber 102.

To this end, the storage container 104 may, for example, include an upper lip or rim 124 arranged to enable the storage container 104 to rest on an upper portion of the main assembly 108, e.g. of the structure of the main assembly 108, during lifting of the main assembly 108 from the table-top 115.

It is generally noted that integration of the food preparation chamber 102 and the storage container 104 in the main assembly 108 may mean, in at least some embodiments, that the food preparation chamber 102 and the storage container 104 are liftable from the table-top 115 in one unit.

In embodiments in which the bottom of the storage container 104 at least partly, e.g. entirely, defines the support member 110, the structure of the main assembly 108 may delimit an opening 126 through which the storage container 104 extends so that the bottom of the storage container 104 can reach the table-top 115.

In such embodiments, the opening 126 may be wider than a width of the storage container 104 where the storage container 104 extends through the opening 126, such that a space is defined between the storage container 104 and a part of the structure delimiting the opening 126.

This space may assist the bottom of the storage container 104 to support the storage container 104 independently of the structure, e.g. chassis and/or housing, of the main assembly 108.

In some embodiments, such as shown in FIGs. 3 and 4, the kitchen appliance 100 comprises a conduit 118 through which the contents 106 of the storage container 104 are deliverable to the food preparation chamber 102.

In such embodiments, the conduit 118 may be a flexible conduit 118. The flexibility of the conduit 118 may assist with decoupling the storage container's 104 weight from the weight of the remainder of the main assembly 108.

The conduit 118 may comprise, e.g. be in the form of, a flexible hose. Such a flexible hose may, for instance, be formed from an elastomeric material, such as silicone.

In some embodiments, such as shown in FIGs. 3 and 4, the kitchen appliance 100 comprises a dosing arrangement 120, 122; 128 for controlling delivery of the contents 106 of the storage container 104 to the food preparation chamber 102.

The dosing arrangement 120, 122; 128 can be designed in any suitable manner, such as with shutter(s), valve(s) 122 and/or pump(s) 128, to control delivery of the contents 106 of the storage container 104 to the food preparation chamber 102.

In some embodiments, such as shown in FIG. 3, the dosing arrangement 120, 122 includes a run out stop element 120 and a valve 122. Such a dosing arrangement 120, 122 may be particularly suitable for dosing liquid from the storage container 104 to the food preparation chamber 102.

Alternatively or additionally, the dosing arrangement 120, 122; 128 may comprise a shutter for controlling passage of solid contents 106, such as flour or coffee grounds, from the storage container 104 to the food preparation chamber 102.

More generally, the dosing arrangement 120, 122; 128 may be configured to control delivery of the contents 106 of the storage container 104 to the food preparation chamber 102 based on the weight of the main assembly 108, other than the at least part of the storage container 104 that is supported on the support member 110.

Alternatively or additionally, a food preparation procedure, e.g. a cooking process, taking place in the food preparation chamber 102 may be controlled based on the weight of the main assembly 108, other than the at least part of the storage container 104 that is supported on the support member 110.

For example, a control signal denoting completion of a food preparation procedure, e.g. a cooking process, taking place in the food preparation chamber 102 may be generated by the kitchen appliance's controller based on the weight of the main assembly 108, other than the at least part of the storage container 104 that is supported on the support member 110.

Such a control signal may cause a change to, e.g. cessation of, operation of the food preparation functionality, e.g. heating system and/or motorized drive system, and/or may cause a user interface to alert a user of the kitchen appliance 100 to the food preparation procedure being complete.

As an illustrative non-limiting example, the kitchen appliance 100 is in the form of a pasta maker and a defined amount of flour is dosed from the storage container 104, and in particular from a first storage portion of the storage container 104, to the food preparation chamber 102, and a defined amount of water is dosed from the storage container 104, and in particular from a second storage portion of the storage container 104, to the food preparation chamber 102.

Correct dosing of the flour and water may be via the weighing sensor assembly 112 weighing the main assembly 108, other than the at least part of the storage container 104 that is supported on the support member 110.

In another illustrative non-limiting example, the kitchen appliance 100 is in the form of a rice cooker, and a weight of rice in the food preparation chamber 102 is determined via the weighing sensor assembly 112 weighing the main assembly 108, other than the at least part of the storage container 104 that is supported on the support member 110. Similarly, a weight of water for mixing with the rice is determined via the weighing sensor assembly 112 weighing the main assembly 108, other than the at least part of the storage container 104 that is supported on the support member 110.

In such an example, completion of the rice cooking process may be identified by determining the amount of water evaporated from the food preparation chamber 102 via the weighing sensor assembly 112 weighing the main assembly 108, other than the at least part of the storage container 104 that is supported on the support member 110.

In a further illustrative non-limiting example, weight loss of food during a cooking process taking place in an air fryer or air cooker is monitored to determine doneness, with the weight loss of the food being determined via the weighing sensor assembly 112 weighing the main assembly 108, other than the at least part of the storage container 104 that is supported on the support member 110.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

## Claims

1. A kitchen appliance (100) comprising:
a food preparation chamber (102);
a storage container (104) in which contents (106) are storable prior to delivery to the food preparation chamber, the food preparation chamber and the storage container being integrated in a main assembly (108) of the kitchen appliance;
a support member (110) on which at least part of the storage container is supportable; and
a weighing sensor assembly (112) on which the main assembly, other than said at least part of the storage container, is supportable so as to be weighed by the weighing sensor assembly.

2. The kitchen appliance (100) according to claim 1, wherein the support member (110) and the weighing sensor assembly (112) protrude from a table-top facing side (113) of the main assembly (108), with the support member being arranged beneath the storage container (104).

3. The kitchen appliance (100) according to claim 1 or claim 2, wherein the main assembly (108) comprises a structure for retaining the food preparation chamber (102) and the storage container (104), the structure, other than said at least part of the storage container, being supported on the weighing sensor assembly (112).

4. The kitchen appliance (100) according to any one of claims 1 to 3, wherein the storage container (104) is arranged above the support member (110), the support member comprising a support limb portion (114) that upstands to the storage container.

5. The kitchen appliance (100) according to claim 4 when dependent from claim 3, wherein an aperture (116) is defined in the structure, through which aperture the support limb portion (114) upstands towards the storage container (104).

6. The kitchen appliance (100) according to claim 5, wherein the aperture (116) is wider than a width of the support limb portion (114) where the support limb portion extends through the aperture, such that a gap is defined between the support limb portion and a portion of the structure delimiting the aperture.

7. The kitchen appliance (100) according to any one of claims 1 to 6, comprising a flexible conduit (118) through which the contents (106) of the storage container (104) are deliverable to the food preparation chamber (102).

8. The kitchen appliance (100) according to any one of claims 1 to 7, wherein the weighing sensor assembly (112) comprises one or more load cells.

9. The kitchen appliance (100) according to any one of claims 1 to 8, wherein an underside of the weighing sensor assembly (112) is arranged to contact a table-top on which the kitchen appliance is disposed.

10. The kitchen appliance (100) according to any one of claims 1 to 9, wherein an underside of the support member (110) is arranged to contact a table-top on which the kitchen appliance is disposed.

11. The kitchen appliance (100) according to any one of claims 1 to 10, wherein the storage container (104) is for storing liquid.

12. The kitchen appliance (100) according to any one of claims 1 to 11, comprising a dosing arrangement (120, 122; 128) for controlling delivery of the contents (106) of the storage container (104) to the food preparation chamber (102).

13. The kitchen appliance (100) according to claim 12, wherein the dosing arrangement (120, 122; 128) is configured to control delivery of the contents (106) of the storage container (104) to the food preparation chamber (102) based on the weight of the main assembly (108), other than the at least part of the storage container that is supported on the support member (110).

14. The kitchen appliance (100) according to any one of claims 1 to 13, comprising:
a heating system for heating the food preparation chamber (102); and/or
a motorized drive system for driving movement of a utensil arranged in the food preparation chamber.

15. The kitchen appliance (100) according to any one of claims 1 to 14, comprising an air fryer, an air cooker, a food steamer, a rice cooker, a pasta maker, a bread maker, a coffee maker, a food processor, a juicer, or a blender.
